# EUROPEAN PATENT APPLICATION

(11) **EP 4 682 032 A1**
(43) Date of publication of application: **21.01.2026**
(21) Application number: 24770253.3
(22) Date of filing: 01.02.2024
(51) Int. Cl.: B62D 57/02, G05D 1/43

(54) **MOVING DEVICE, AND CONTROL METHOD AND CONTROL PROGRAM FOR MOVING DEVICE**

(30) Priority: 14.03.2023 JP 2023039318
(71) Applicant: Sumitomo Heavy Industries, Ltd., Tokyo 141-6025 (JP)
(72) Inventor: ETO, Haruhiko, Yokosuka-shi, Kanagawa 237-8555 (JP); FUJIMOTO, Hirokazu, Yokosuka-shi, Kanagawa 237-8555 (JP)
(74) Representative: Louis Pöhlau Lohrentz
(86) International application number: PCT/JP2024/003213
(87) International publication number: WO 2024/190133

(57) **Abstract**

A traveling robot 10 includes a plurality of wheels 16 axially supported by a frame 20, a magnet 19 incorporated into each of the plurality of wheels 16, a magnet drive unit 191 that rotates the magnet 19 around a first rotary shaft Ax1, a second encoder 35 that detects a direction of the magnet 19, and a control unit 37. The control unit 37 controls the magnet drive unit 191 to change the direction of the magnet 19, based on the direction of the magnet 19 which is detected by the second encoder 35.

## Description

### Technical Field

The present invention relates to a moving device, and a control method and a control program for a moving device.

### Background Art

PTL 1 discloses a moving device which can travel on a wall surface while adsorbing four wheels to the wall surface by using a magnetic force. In this type of the moving device, a backdrivable motor is adopted for driving a magnet incorporated into the wheel. In this manner, the magnet can be passively adsorbed to a traveling surface of a magnetic body.

### Citation List

### Patent Literature

[PTL 1] International Publication No. 2021/247275

### Summary of Invention

### Technical Problem

However, for example, in a case of a moving path associated with a gap crossing operation, a transfer operation from a floor surface to a wall surface, or the like, that is, a moving path in which wheels are physically stuck while a magnet is adsorbed to a traveling surface on a front side, it is necessary to adjust an angle (direction) of the magnet. That is, in this case, after an operator (human) confirms stuck of the wheels, the operator needs to perform a complicated operation of separating the magnet from the traveling surface on the front side (rear side in a traveling direction) and newly adsorbing the magnet to the traveling surface on the front side in the traveling direction.

The present invention is made in view of the above-described circumstances, and an object of the present invention is to enable a moving device to travel along a moving path which requires direction adjustment of a magnet by performing a simple operation.

### Solution to Problem

According to the present invention, there is provided a moving device including a plurality of wheels axially supported by a vehicle body, a magnet incorporated into each of the plurality of wheels, a magnet drive unit that rotates the magnet around a rotary shaft, a detection unit that detects a direction of the magnet, and a control unit that controls the magnet drive unit to change the direction of the magnet, based on the direction of the magnet.

### Advantageous Effects of Invention

According to the present invention, a moving device can travel along a moving path which requires direction adjustment of a magnet by performing a simple operation.

### Brief Description of Drawings

Fig. 1A is a plan view of a traveling robot according to an embodiment.
Fig. 1B is a perspective view of the traveling robot according to the embodiment.
Fig. 2A is a sectional view showing a structure of a wheel according to the embodiment, and is a view in a Y direction.
Fig. 2B is a sectional view showing a structure of the wheel according to the embodiment, and is a view in an X direction.
Fig. 3 is a block diagram showing a schematic control configuration of the traveling robot according to the embodiment.
Fig. 4 is a flowchart showing a procedure of a gap crossing process according to the embodiment.
Fig. 5A is a view for describing the gap crossing process according to the embodiment.
Fig. 5B is a view for describing the gap crossing process according to the embodiment.
Fig. 6 is a flowchart showing a procedure of a wall surface shifting process according to the embodiment.
Fig. 7A is a view for describing the wall surface shifting process according to the embodiment.
Fig. 7B is a view for describing the wall surface shifting process according to the embodiment.
Fig. 7C is a view for describing the wall surface shifting process according to the embodiment.

### Description of Embodiments

Hereinafter, an embodiment according to the present invention will be described in detail with reference to the drawings.

### [Configuration of Traveling Robot]

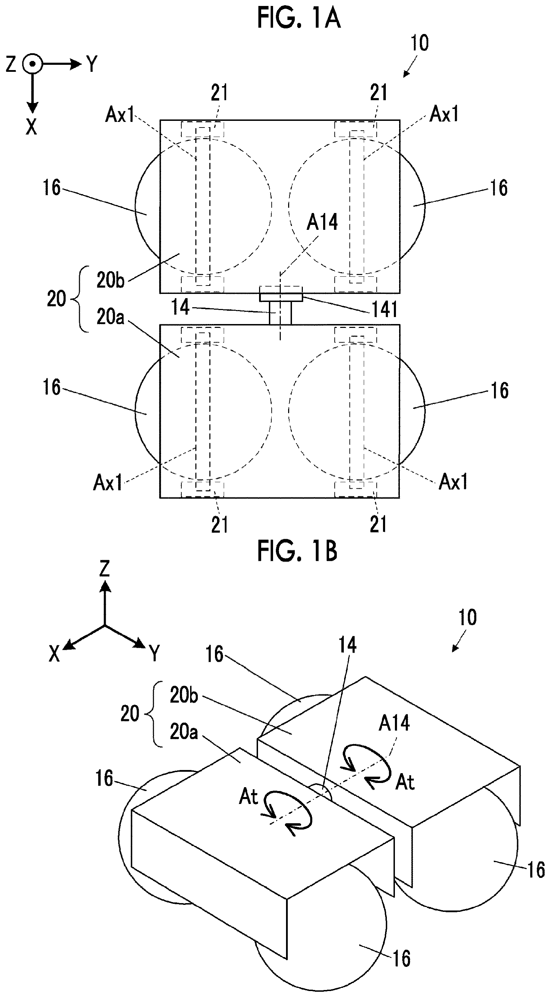

Fig. 1A is a plan view of a traveling robot 10 according to the present embodiment, and Fig. 1B is a perspective view of the traveling robot 10.

As shown in Figs. 1A and 1B, the traveling robot 10 is an example of a moving device according to the present invention, and is a robot which can travel on a floor surface, a wall surface, a ceiling surface, or the like having a gap. For example, the traveling robot 10 is remotely operated by an operator, or autonomously travels, based on a predetermined traveling program.

Hereinafter, each direction of XYZ perpendicular to each other is set as shown in each drawing. In the present embodiment, an XY plane is a horizontal plane, and a Z direction is a vertical direction.

Specifically, the traveling robot 10 includes a plurality of wheels 16 and a frame 20 that supports (axially supports) the plurality of wheels 16.

Each of four wheels 16 is supported to be rotatable around a first rotary shaft Ax1 along the X direction. Each of the wheels 16 has a spherical shape (spherical shell shape), and can transmit a driving force to a traveling surface in various directions. The number of the wheels 16 may be three, five, or more, or may be one or two. When the number of the wheels 16 is one or two, the frame 20 can be supported by providing a caster which can roll as an auxiliary wheel in addition to the wheel 16. In addition, it is not essential that the wheel 16 has the spherical shape, and for example, the wheel 16 may have any shape such as a roller shape, as long as the wheel 16 can follow the traveling surface in various directions and can transmit the driving force to the traveling surface.

The frame 20 includes a first frame 20a and a second frame 20b which are aligned in the X direction. Each of the first frame 20a and the second frame 20b rotatably supports two wheels 16 aligned in the Y direction via the first rotary shaft Ax1.

The first frame 20a and the second frame 20b are connected via a suspension mechanism 14.

The suspension mechanism 14 is a mechanism in which a disposition relationship between the first frame 20a and the second frame 20b is changeable in a twisting direction At. The twisting direction At is a pivoting direction around an axis A14 extending in a direction (X direction) in which the first frame 20a and the second frame 20b are aligned. The mechanism is also called a rocker suspension mechanism. The suspension mechanism 14 can change the disposition relationship between the first frame 20a and the second frame 20b in the twisting direction At, and can bring the four wheels 16 into contact with curved surfaces having various shapes.

In addition, a measuring instrument 141 such as an encoder for measuring a deformed degree is provided in the suspension mechanism 14.

The suspension mechanism 14 is not limited to the above-described example. For example, the suspension mechanism 14 may be a mechanism that can relatively displace a frame for rotatably supporting one wheel 16 and a frame for rotatably supporting three wheels 16. Alternatively, the suspension mechanism 14 may have a configuration in which a frame for supporting each wheel 16 can displace each of a plurality of frames for supporting the other wheel 16. Without being limited to the configuration which can displace the frame in the twisting direction, as the configuration which can displace the frame, a configuration which enables a translational movement of each frame in the direction in which the frames are aligned, a configuration which enables a translational movement of the frame in a direction perpendicular or oblique to the direction in which the frames are aligned, a configuration in which one or both of an angle and a distance between the two frames are variable via various link mechanisms, and a configuration in which two or more of these configurations are combined may be applied.

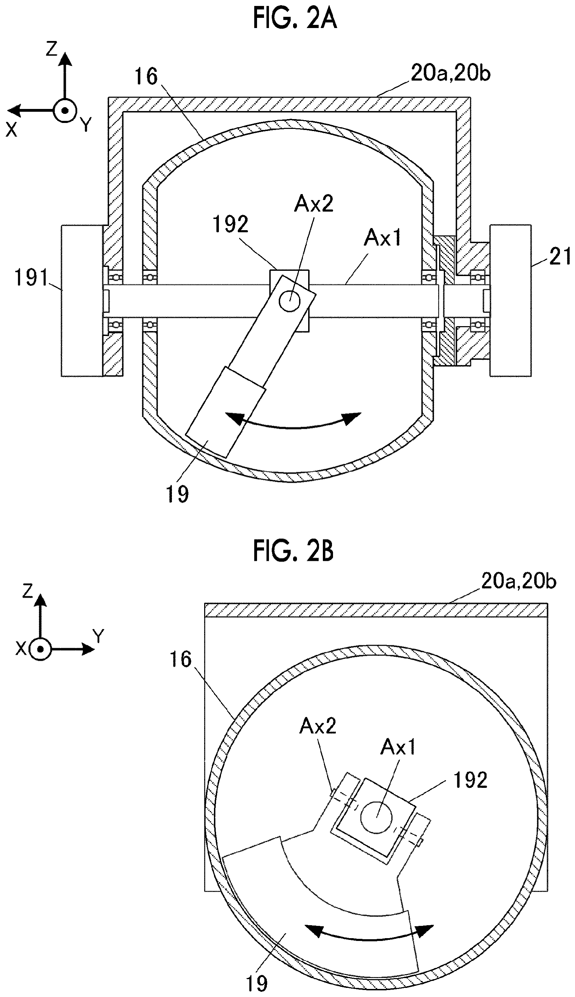

Fig. 2A is a sectional view showing a structure of the wheel 16, and is a view in the Y direction, and Fig. 2B is a sectional view showing a structure of the wheel 16, and is a view in the X direction.

As shown in Figs. 2A and 2B, a magnet 19 and a link mechanism 192 that supports the magnet 19 to be displaceable are incorporated into each of the wheels 16.

The link mechanism 192 supports the magnet 19 to be pivotable in a pivoting direction around the first rotary shaft Ax1 and in a pivoting direction around a second rotary shaft Ax2 intersecting (for example, perpendicular to) the first rotary shaft Ax1. The magnet 19 may be a permanent magnet, or may be an electromagnet. According to the configuration, when the wheel 16 is grounded to a magnetic body such as iron, the magnet is adsorbed to a ground surface so that the wheel 16 is adsorbed to the ground surface. Therefore, the traveling robot 10 can be adsorbed to the wall surface or the ceiling surface against gravity, and can travel on the surface. In addition, even when the wheel 16 is grounded on a surface having various directions by the link mechanism 192, the magnet 19 faces the ground surface by independently and flexibly changing an orientation from the wheel 16, and a strong suction force with respect to the ground surface is obtained.

In addition, a wheel drive unit 21 that rotationally drives the wheels 16, and a magnet drive unit 191 that rotationally drives the magnet 19 are provided in each of the wheels 16.

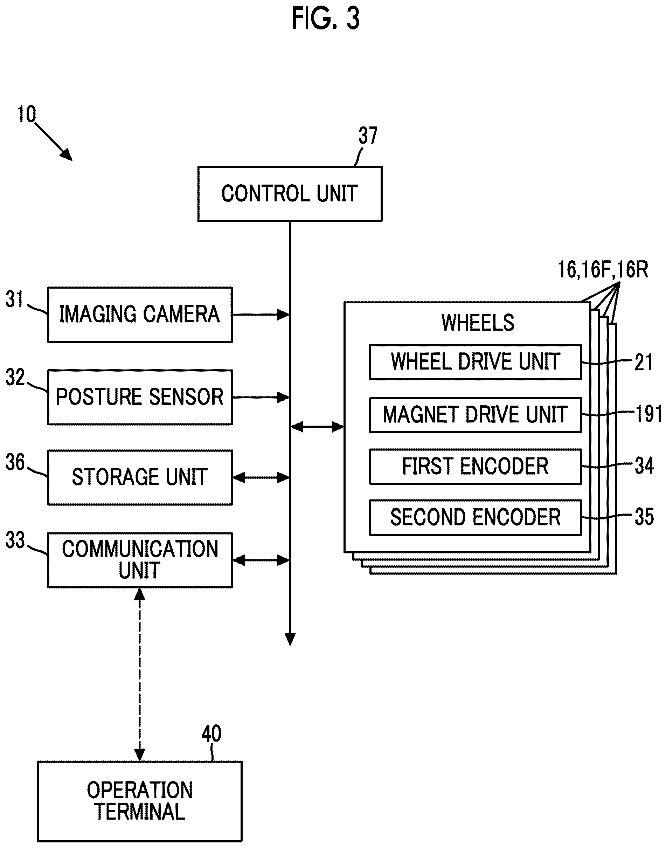

The wheel drive unit 21 is a motor (for example, a gear motor) which can control a rotation amount or a rotation speed, and rotates the wheels 16 around the same axis as that of the first rotary shaft Ax1. The rotation amount or the rotation speed of the wheel 16 is detected by a first encoder 34 (refer to Fig. 3).

The magnet drive unit 191 is a motor (for example, a gear motor) which can control the rotation amount or the rotation speed, and rotates the first rotary shaft Ax1 that supports the magnet 19. For example, an orientation (direction) of the magnet 19 is detected by a second encoder 35 (refer to Fig. 3) which is a two-axis encoder. In addition, as the magnet drive unit 191, a backdrivable magnet drive unit is used when a torque output is turned off.

According to the traveling robot 10 configured as described above, movements in various directions, such as turning, leftward turn, rightward turning, and straight advancing are possible by controlling the rotation amount of each of the four wheels 16. Furthermore, even when the traveling surface is a curved surface, the suspension mechanism 14 enables the traveling robot 10 to travel in a state where all the four wheels 16 are grounded on the traveling surface.

Fig. 3 is a block diagram showing a schematic control configuration of the traveling robot 10.

As shown in the drawing, in addition to the above-described configuration, the traveling robot 10 includes an imaging camera 31, a posture sensor 32, a communication unit 33, a storage unit 36, and a control unit 37.

The imaging camera 31 is mounted on the frame 20, for example, captures a front image in the traveling direction, and stores the image in the storage unit 36. It is desirable that the imaging camera 31 can acquire distance information together by adopting 3D-Light Detection and Ranging (LiDAR) or the like, for example. The posture sensor 32 is mounted on the frame 20, measures three-dimensional acceleration and an angular velocity of the frame 20, and outputs a measurement result to the control unit 37. For example, the posture sensor 32 is an inertial measurement unit (IMU).

The communication unit 33 transmits and receives various information to and from an operation terminal 40 of an operator through a predetermined communication network, based on a predetermined wireless communication standard.

The storage unit 36 is a memory including a Random Access Memory (RAM) or a Read Only Memory (ROM), stores various programs and data, and functions as a work region of the control unit 37.

For example, the control unit 37 includes a central processing unit (CPU) or the like, and controls an operation of each part of the traveling robot 10. Specifically, the control unit 37 operates the wheel drive unit 21 and the magnet drive unit 191, based on an operation command from an operator through the communication unit 33, or deploys a program stored in advance in the storage unit 36, and executes various processes in cooperation with the deployed program.

### [Gap Crossing Process]

Subsequently, a gap crossing process of the traveling robot 10 that travels by crossing a gap on the floor surface will be described.

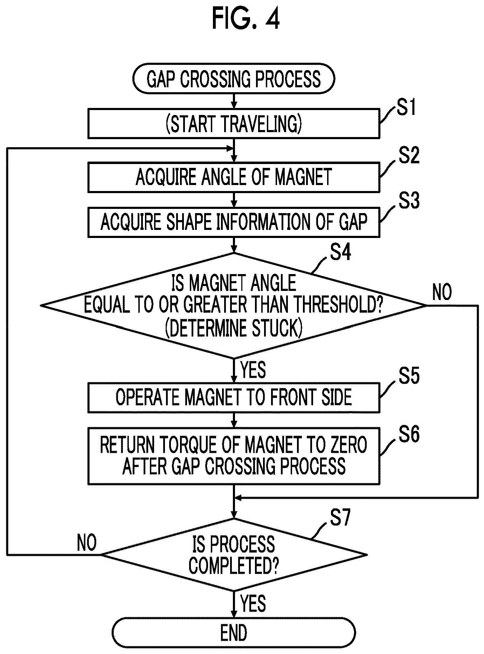

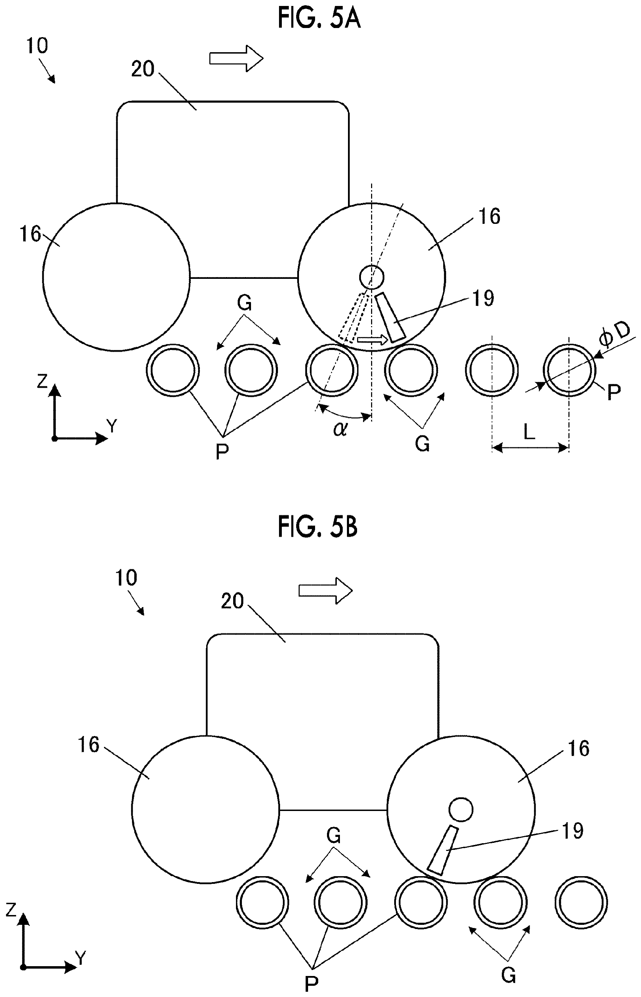

Fig. 4 is a flowchart showing a procedure of the gap crossing process. Figs. 5A and 5B are views for describing the gap crossing process.

The gap crossing process is a process performed when the traveling robot 10 travels on the floor surface having a gap in which the wheel 16 can be stuck. Here, the "gap" refers to a gap (space) having a radius smaller than an outer radius of the wheel 16, and includes a hole portion, a recessed portion, or the like. The gap crossing process is performed by the control unit 37 reading a corresponding program from the storage unit 36 and deploying the program.

Here, as shown in Fig. 5A, a case will be described where the traveling robot 10 travels in the Y direction on a plurality of pipes P arrayed in the Y direction. The pipe P is a circular pipe of a magnetic body extending in the X direction, and has a predetermined gap G between the pipes P adjacent to each other. The gap crossing process is not limited to a traveling path where the plurality of pipes are arrayed, and can be widely applied when the traveling robot 10 moves on the traveling surface having the gap.

In addition, the same gap crossing process as in the present application can also be applied to a wall surface where an iron plate intersects another iron plate.

As shown in Fig. 4, when the gap crossing process is performed and traveling of the traveling robot 10 is started by a traveling start command of an operator (Step S1), the control unit 37 detects an angle (direction) of the magnet 19 (Step S2).

In this case, the magnet drive unit 191 is not driven (does not generate a torque), and the magnet 19 faces a direction of the pipe P by using a magnetic force. In this step, the control unit 37 causes the second encoder 35 to detect the angle of the magnet 19, and stores the detected angle in the storage unit 36. Here, any configuration may be adopted as long as the angle of the magnet 19 around at least the first rotary shaft Ax1 is obtained.

Next, the control unit 37 acquires shape information of the gap G (Step S3).

Here, as the shape information of the gap G, a diameter φD of the pipe P and a distance L between the two adjacent pipes P are stored in advance in the storage unit 36. The control unit 37 reads the information from the storage unit 36.

A method for acquiring the shape information of the gap G is not particularly limited, and for example, the diameter φD or the distance L of the pipe P may be acquired, based on an image (or three-dimensional point cloud data) acquired by the imaging camera 31, or may be acquired from an external terminal through the communication unit 33.

Next, the control unit 37 determines whether the angle of the magnet 19 around the first rotary shaft Ax1 is equal to or greater than a predetermined threshold in each of the wheels 16 (Step S4).

In the determination in this step, the control unit 37 determines whether the wheel 16 having the magnet 19 is in a stuck state fitted in the gap **G.** The threshold is an angle smaller by a predetermined amount than an angle α formed between a line connecting a center of the wheel 16 and a ground contact point in a state where the wheel 16 is fitted to the gap **G,** and a vertical direction. The threshold itself may be stored in advance in the storage unit 36, and in this case, it is not necessary to acquire information in Step S3 or to calculate the threshold. The control unit 37 sets (calculates) the threshold, based on the shape information of the gap G which is acquired in Step S3, and compares the threshold with the angle of the magnet 19 around the first rotary shaft Ax1 which is acquired in Step S2.

In addition, in this step, together with the determination based on the angle of the magnet 19, determination based on a current value of the wheel drive unit 21, that is, an output torque of the wheel 16 may be made to improve determination accuracy. That is, when the angle of the magnet 19 is equal to or greater than the threshold and the output torque of the wheel 16 is equal to or greater than a predetermined value, it may be determined that the wheel 16 is in the stuck state.

In Step S4, when it is determined that the angle of the magnet 19 around the first rotary shaft Ax1 is smaller than the threshold in all of the wheels 16 (Step S4; No), the control unit 37 proceeds to a process in Step S7 (to be described later).

On the other hand, in Step S4, when it is determined that the angle of the magnet 19 around the first rotary shaft Ax1 is equal to or greater than the threshold in any of the wheels 16 (Step S4; Yes), the control unit 37 operates the magnet 19 to a front side in the traveling direction (Step S5).

That is, in this case, it is considered as follows. The wheel 16 is in the stuck state. The magnet 19 is adsorbed to the pipe P on the rear side of the center of the wheel 16, and thus, sufficient traction to the front side is not obtained. Therefore, as shown in Fig. 5A, in order to obtain the traction required for crossing the gap **G,** the control unit 37 controls the magnet drive unit 191 to rotate the magnet 19 to the front side in the traveling direction, and causes the magnet 19 to be adsorbed to the pipe P on the front side of the center of the wheel 16. For example, the rotation angle in this case is approximately twice a current angle (direction) of the magnet 19 and the angle α formed with a vertically downward direction.

After the magnet 19 is rotated, it is preferable to confirm that the magnet 19 is properly adsorbed to the pipe P on the front side, based on a current value of the magnet drive unit 191.

Since the magnet 19 is adsorbed to the pipe P on the front side, the traction to the front side is obtained. As shown in Fig. 5B, the wheel 16 in the stuck state crosses the gap **G.**

Thereafter, after confirming that the wheel 16 crosses the gap G, the control unit 37 returns a drive torque of the magnet 19 which is obtained by the magnet drive unit 191 to zero (Step S6).

For example, in determining whether the wheel 16 crosses the gap G, it may be determined that the wheel 16 crosses the gap G, when the wheel 16 moves to immediately above the pipe P to which the magnet 19 is adsorbed.

Next, the control unit 37 determines whether to complete the gap crossing process (Step S7), and when it is determined that the gap crossing process is not completed (Step S7; No), the control unit 37 proceeds to the above-described process in Step S2, and continues the traveling.

For example, when it is determined that the gap crossing process needs to be completed due to completion of the movement to a target position or the like (Step S7; Yes), the control unit 37 completes the gap crossing process.

### [Wall Surface Shifting Process]

Subsequently, a wall surface shifting process in which the traveling robot 10 shifts between the floor surface and the wall surface will be described.

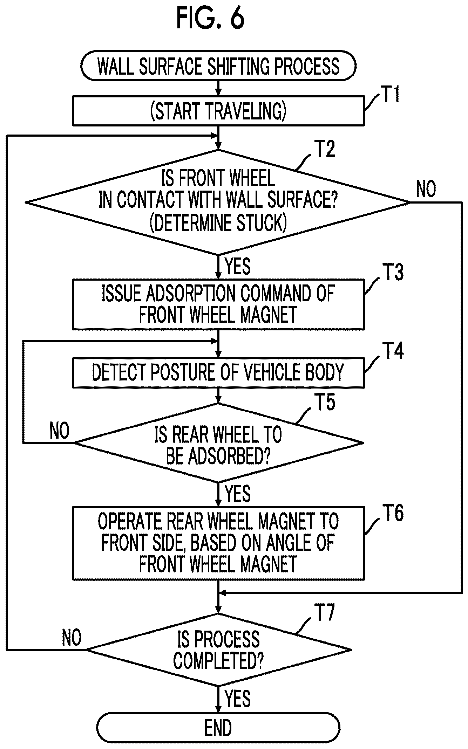

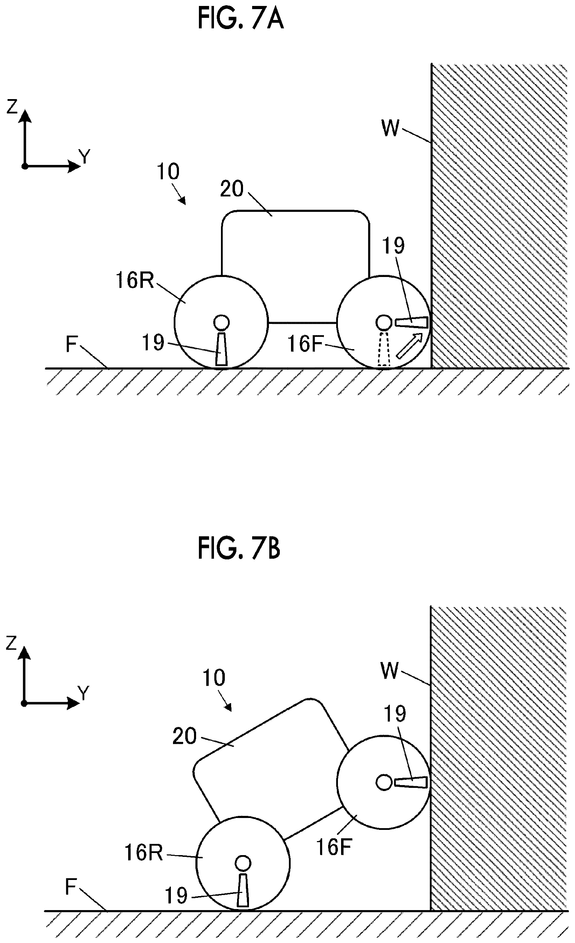

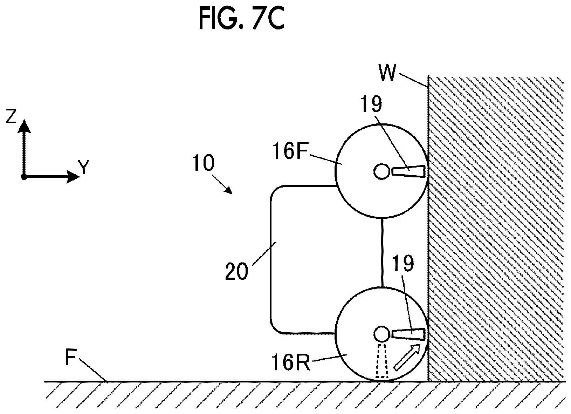

Fig. 6 is a flowchart showing a procedure of the wall surface shifting process. Figs. 7A, 7B, and 7C are views for describing the wall surface shifting process.

The wall surface shifting process is a process performed when the traveling robot 10 shifts (transfers) between the floor surface and the wall surface. Here, the "wall surface" refers to a surface rising upright from the floor surface (reference surface) by a predetermined angle or larger, and includes an inclined surface inclined at a predetermined inclination angle. The wall surface shifting process is performed by the control unit 37 reading and deploying the corresponding program from the storage unit 36.

Here, a case will be described where the traveling robot 10 moves upward in the vertical direction (Z direction) by transferring to a substantially perpendicular wall surface W after traveling on a floor surface F in the Y direction. At least the wall surface W out of the floor surface F and the wall surface W is made of a magnetic material, and the magnet 19 is adsorbed to the wall surface W.

Hereinafter, in the four wheels 16, two on the front side in the traveling direction (Y direction) will be referred to as front wheels 16F, and two on the rear side in the traveling direction will be referred to as rear wheels 16R.

As shown in Fig. **6****,** when the wall surface shifting process is performed and the traveling of the traveling robot 10 on the floor surface F is started by the traveling start command of the operator (Step T1), the control unit 37 determines whether the front wheel 16F is in contact with the wall surface W (Step T2).

In the determination in this step, the control unit 37 determines whether the front wheel 16F is in the stuck state (state where the traveling robot 10 is fitted between the floor surface F and the wall surface W). This determination may be made, based on the current value of the wheel drive unit 21 that drives the front wheel 16F, or may be made, based on image information obtained by the imaging camera 31 or visual observation of the operator.

When it is determined that the front wheel 16F is not in contact with the wall surface W (Step T2; No), the control unit 37 proceeds to a process in Step T7 (to be described later).

On the other hand, in Step T2, when it is determined that the front wheel 16F is in contact with the wall surface W (Step T2; Yes), the control unit 37 causes the magnet 19 of the front wheel 16F to be adsorbed to the wall surface W (Step T3).

In this case, the magnet 19 of the front wheel 16F faces downward due to a suction force applied to the floor surface F or a self-weight. Therefore, as shown in Fig. 7A, for example, the control unit 37 causes the magnet drive unit 191 to rotate the magnet 19 of the front wheel 16F to the front side in the traveling direction, based on the operation of the operator, and causes the magnet 19 to be adsorbed to the wall surface W. In this case, the operator transmits an operation command for rotating the magnet 19 from the operation terminal 40 to the traveling robot 10 through the communication unit 33.

The process here is preferably performed one by one sequentially on the two front wheels 16F. In addition, after the magnet 19 is rotated, it is preferable to confirm that the magnet 19 is properly adsorbed to the wall surface W, based on the current value of the magnet drive unit 191.

After the two front wheels 16F are adsorbed to the wall surface W in Step T3, as shown in Fig. 7B, the traveling robot 10 brings the rear wheel 16R closer to the wall surface W while ascending the wall surface W with the front wheel 16F.

Next, the control unit 37 causes the posture sensor 32 to detect a posture of the frame 20 (vehicle body) (Step T4).

Here, the control unit 37 detects at least an inclination angle of the frame 20 as the "posture" of the frame 20.

Next, the control unit 37 determines whether to cause the rear wheel 16R to be adsorbed to the wall surface W, based on the posture information detected in Step T4 (Step T5).

Here, although not particularly limited, for example, the control unit 37 determines that the rear wheel 16R is adsorbed to the wall surface W, when the frame 20 is in a substantially perpendicularly erected state (within a predetermined range in the vertical direction). Alternatively, it may be determined that the rear wheel 16R is adsorbed to the wall surface W, when the inclination angle of the frame 20 is an angle (within a predetermined range) perpendicular to the direction of the magnet 19 of the front wheel 16F, or is the inclination angle (within a predetermined range) when the inclination angle of the wall surface W is known.

When it is determined that the rear wheel 16R is not adsorbed to the wall surface W (Step T5; No), the control unit 37 proceeds to the above-described process in Step T4.

On the other hand, in Step T5, when it is determined that the rear wheel 16R is adsorbed to the wall surface W (Step T5; Yes), the control unit 37 operates the magnet 19 of the rear wheel 16R to the front side in the traveling direction, based on the angle of the magnet 19 of the front wheel 16F (Step T6).

Specifically, first, the control unit 37 causes the second encoder 35 to detect the angle of the magnet 19 of the front wheel 16F around the first rotary shaft Ax1. As shown in Fig. 7C, the control unit 37 drives the magnet drive unit 191 to rotate the angle of the magnet 19 of the rear wheel 16R around the first rotary shaft Ax1 to correspond to the angle of the magnet 19 of the front wheel 16F around the first rotary shaft Ax1. In this manner, the magnet 19 of the rear wheel 16R is adsorbed to the wall surface W.

The process here is preferably performed one by one sequentially on the two rear wheels 16R. In addition, after the magnet 19 is rotated, it is preferable to confirm that the magnet 19 is properly adsorbed to the wall surface W, based on the current value of the magnet drive unit 191.

Next, the control unit 37 determines whether to complete the wall surface shifting process (Step T7), and when it is determined not to complete the wall surface shifting process (Step T7; No), the control unit 37 proceeds to the above-described process in Step T2.

For example, when it is determined that the wall surface shifting process needs to be completed due to completion of the movement to a target position (Step T7; Yes), the control unit 37 completes the wall surface shifting process.

Here, a case has been described where the traveling robot 10 shifts (transfers) from the floor surface F to the wall surface W. However, the same process as described above can also be applied when the traveling robot 10 shifts from the wall surface W to the floor surface F. That is, in this case, basically, the "floor surface" and the "wall surface" in the above-described wall surface shifting process may be replaced with each other.

### [Technical Effect of Present Embodiment]

As described above, according to the present embodiment, the direction of the magnet 19 is changed by controlling the magnet drive unit 191, based on the direction of the magnet 19 which is detected by the second encoder 35.

That is, in a case of the gap crossing process, the stuck state of the wheels 16 is detected, based on the direction of the magnet 19, and thereafter, the magnet 19 is rotated to be adsorbed to the pipe P on the front side of the gap **G.**

In addition, in a case of the wall surface shifting process, the magnet 19 of the rear wheel 16R is rotated and adsorbed to the wall surface **W,** based on the direction of the magnet 19 of the front wheel 16F.

In this manner, the direction of the magnet 19 can be automatically adjusted, unlike the related art in which the magnet is rotated to be adsorbed to the traveling surface on the front side in the traveling direction by an operation of an operator (human). Therefore, the traveling robot 10 can travel along the moving path which requires the direction adjustment of the magnet 19 by performing a simple operation. As a result, the traveling robot 10 can travel on a traveling surface having a more complicated shape. Moreover, a burden on an operator can be reduced, a special operation skill is not required for the operator, and furthermore, work using the traveling robot 10 can be efficiently carried out.

### [Others]

Hitherto, the embodiment of the present invention has been described. However, the present invention is not limited to the above-described embodiment.

For example, the moving device according to the present invention may be applied to a traveling robot that moves on each part of a steel structure, for example, in shipbuilding and heavy industry fields, construction and building fields, and infrastructure inspection and maintenance fields.

Alternatively, details in the above-described embodiment can appropriately be changed within the scope not departing from the concept of the invention.

### Industrial Applicability

As described above, the present invention is useful for the traveling robot that travels along the moving path which requires the direction adjustment of the magnet by performing a simple operation.

### Reference Signs List

- 10: traveling robot (moving device)
- 16: wheel
- 16F: front wheel
- 16R: rear wheel
- 19: magnet
- 20: frame (vehicle body)
- 21: wheel drive unit
- 32: posture sensor
- 35: second encoder (detection unit)
- 36: storage unit
- 37: control unit
- 191: magnet drive unit
- 192: link mechanism
- Ax1: first rotary shaft
- Ax2: second rotary shaft
- F: floor surface
- G: gap
- P: pipe
- W: wall surface
- α: angle

## Claims

1. A moving device comprising:
a plurality of wheels axially supported by a vehicle body;
a magnet incorporated into each of the plurality of wheels;
a magnet drive unit that rotates the magnet around a rotary shaft;
a detection unit that detects a direction of the magnet; and
a control unit that controls the magnet drive unit to change the direction of the magnet, based on the direction of the magnet which is detected by the detection unit.

2. The moving device according to claim 1,
wherein when the moving device moves on a traveling surface having a gap smaller than a diameter of the wheel, the control unit determines whether the wheel is fitted to the gap, based on the direction of the magnet.

3. The moving device according to claim 2,
wherein when the direction of the magnet faces a rear side in a traveling direction at an angle equal to or greater than a predetermined threshold, the control unit determines that the wheel is fitted to the gap, and rotates the magnet to a front side in the traveling direction.

4. The moving device according to claim 1,
wherein when the moving device shifts between a floor surface and a wall surface, and the wheel on a front side in a traveling direction is adsorbed to the floor surface or the wall surface, the control unit rotates the magnet of the wheel on a rear side in the traveling direction to the front side in the traveling direction, based on a direction of the magnet of the wheel on the front side in the traveling direction.

5. The moving device according to claim 1, further comprising:
a wheel drive unit that drives the wheels,
wherein the control unit controls the magnet drive unit to change the direction of the magnet, based on the direction of the magnet and an output current of the wheel drive unit.

6. A moving device comprising:
a plurality of wheels axially supported by a vehicle body;
a magnet incorporated into each of the plurality of wheels;
a magnet drive unit that rotates the magnet around a rotary shaft; and
a detection unit that detects a direction of the magnet,
wherein the moving device crosses a gap by controlling the magnet drive unit, based on the direction of the magnet which is detected by the detection unit.

7. A control method for a moving device, the control method being executed by a control unit of a moving device including a plurality of wheels axially supported by a vehicle body, a magnet incorporated into each of the plurality of wheels, a magnet drive unit that rotates the magnet around a rotary shaft, and a detection unit that detects a direction of the magnet, the control method comprising:
a detection process of detecting, via the detection unit, the direction of the magnet; and
a control process of controlling the magnet drive unit to change the direction of the magnet, based on the direction of the magnet which is detected by the detection unit.

8. A control program for a moving device, the control program causing a computer of a moving device including a plurality of wheels axially supported by a vehicle body, a magnet incorporated into each of the plurality of wheels, a magnet drive unit that rotates the magnet around a rotary shaft, and a detection unit that detects a direction of the magnet, to function as
a control unit that controls the magnet drive unit to change the direction of the magnet, based on the direction of the magnet which is detected by the detection unit.
